# EUROPEAN PATENT APPLICATION

(11) **EP 1 650 748 A1**
(43) Date of publication of application: **26.04.2006**
(21) Application number: 05020369.4
(22) Date of filing: 19.09.2005
(51) Int. Cl.: G11B 7/007, G11B 7/24, G11B 7/241

(54) **Optical recording medium, its production method, and recording method of the optical recording medium**

(30) Priority: 17.09.2004 JP 2004271594
(71) Applicant: Ricoh Company, Ltd., Tokyo 143-8555 (JP)
(72) Inventor: Yashiro, Tohru c/o Ricoh Company, Ltd., Tokyo 143-8555 (JP)
(74) Representative: Schwabe, Hans-Georg

(57) **Abstract**

The present invention relates to hybrid optical recording medium having a ROM portion dedicated to reproduction and a recordable portion in which writing is possible.

In one embodiment, a dual-layer optical recording medium is disclosed.

## Description

### BACKGROUND FOR THE INVENTION

This application claims priority and contains subject matter related to Japanese Patent Application No. JP2004-271594, filed on 2004 September 17th, the entire contents of which is hereby incorporated by reference.

### Field of the Invention

The present invention relates to an optical recording medium, method of manufacturing thereof and recording method.

### Discussion of the Background

In addition to read-only optical recording media such as digital versatile discs (DVDs), recordable DVD media such as DVD+R, DVD+RW, DVD-R, DVD-RW and DVD-RAM media have become commercially practical. These DVD+R and DVD+RW media are defined as an extension of technologies on conventional recordable compact discs such as CD-R and CD-RW media. The recording density (track pitch and signal mark length) and the thickness of the medium_substrate are designed so as to be specifically compatible among CDs and DVDs to secure a reproduction compatibility with read-only DVD media.

For example, DVD+R media are produced by applying a film of dye to a substrate by spin coating to form an optical recording layer, forming a metal reflective layer on the back side thereof to constitute an information recording substrate, and bonding the information recording substrate with another substrate having the same dimensions with the interposition of an adhesive material, as in CD-R media. The optical recording layer in this case comprises a dye material. One of the features of the CD-R media is that they have a high reflectivity of 65% to satisfy the specifications in CD systems. With regard to the CD-R, by providing a read-only ROM portion in a same recording surface together with the recordable layer, a hybrid medium specifically including features of ROM medium and recordable medium has come to be commercialized.

Other related technologies are disclosed in Patent Documents 1 through 6, now described.
(1) The invention as described in Japanese Patent Laid-open Publication No. H5-225619 relates to an optical recording medium, including a read-only ROM portion and a recordable portion using dye on a recording surface. By controlling the shape of the dye embedded in the recording layer formed in the ROM substrate, both properties of the ROM and the recordable portion may be well-controlled in the optical recording medium included in the substrate/dye layer/protective layer.
(2) The invention as described in Japanese Patent Laid-open Publication No. H10-340483 relates to an optical recording medium including a read-only ROM portion and an rewritable recordable portion on the recording surface, in which a reflective layer/dye layer/protective layer are serially formed on the ROM substrate, whereby both properties of the ROM and the recordable portion are compatibly controlled. Reflectance ratio for the above construction is obtained by simulation.
(3) The invention as described in Japanese Patent Laid-open Publication No. 2002-237093 proposes an optical recording medium including a read-only ROM portion and an rewritable recordable portion on the recording surface, in which a reflective layer/dye layer/protective layer are serially formed on the ROM substrate and a guide groove is planarized with the recording layer, whereby both properties of the ROM and the recordable portion are compatibly controlled. Also disclosed is an embodiment of a protective layer using an organic material.
(4) The invention as described in Japanese Patent Laid-open Publication No. H11-66622 relates to an optical recording medium formed of two substrates, on which a recording layer using a dye is formed. The two substrates are laminated with each other via a spacing layer to be used for focusing purposes. The optical recording medium is a type in which recording and reproducing can be made using two layers from one side.
(5) The invention as disclosed in Japanese Patent Laid-open Publication No. 2000-311384 relates to a one-sided dual-layer recording/reproducing type optical recording medium, having two substrates laminated with a recording layer using dye and a barrier layer that are provided on each substrate surface.
(6) The invention as disclosed in Japanese Patent Laid-open Publication No. 2003-331473 relates to a one-sided dual-layer recording/reproducing type optical recording medium, in which a recording layer using dye, a semi-transparent reflective layer, a bonding layer, a buffer layer, a dye layer, a reflective layer are serially laminated on a substrate.

Although hybrid CD-R media have been developed commercially, until now, hybrid DVD media have been difficult to develop for the following reasons.

The conventional DVD recording medium has been configured such that, on a substrate including a ROM (read-only) portion in which information is prerecorded, and an recordable area in which guide grooves are previously provided, an information recording layer including organic dye, a reflective layer, and an organic protective layer are sequentially provided. In this case, the organic dye layer is formed by a spin coating method so as to fill the difference in depth of the substrate surface, and thus the difference in depth of the concave-convex mark of the ROM portion is buried with the dye layer. Accordingly, to obtain the signal in the stepwise depth of the ROM identical level from the interface surface between the dye layer and the reflective layer, both being the main reflective surfaces, the concave-convex pit difference formed of the substrate needs to be set large considering the buried amount with dye, or to control the amount of the dye.

However, it was difficult to control the amount of dye due to a narrower track pitch of 0.74 µm of the DVD medium, using the same technology applied to the CD medium.

The Patent Documents (2) and (3) propose that, on a substrate including a ROM (read-only) portion in which information is pre-recorded, and a portion in which guide grooves are previously provided, a reflective layer, an information recording layer including organic dye, and an organic protective layer are sequentially provided, and that the recording and reproduction is made from the protective layer side. In this structure, the substrate and the reflective layer are used as main reflective layers, and the signal property corresponding to the ROM portion and the concave-convex stepwise difference in the guide grooves may be obtained.

However, according to Patent Documents (2) and (3), a proposed construction is only to reverse the optical incident surface; these documents provide no teaching with regard to the recording capability of a recordable portion, and therefore they do not serve to solve the problems related to the recording and reproduction. Patent documents (2) and (3) do not suggest a dual layer DVD having sufficient recording capability.

On the other hand, a read-only DVD including two recording layers for the purpose of increasing recording capacity has been proposed. If the recording layer is only one layer, the storage capacity is 4.7 GB, which is not sufficient for many applications of the medium today, such as recording full contents of a movie.

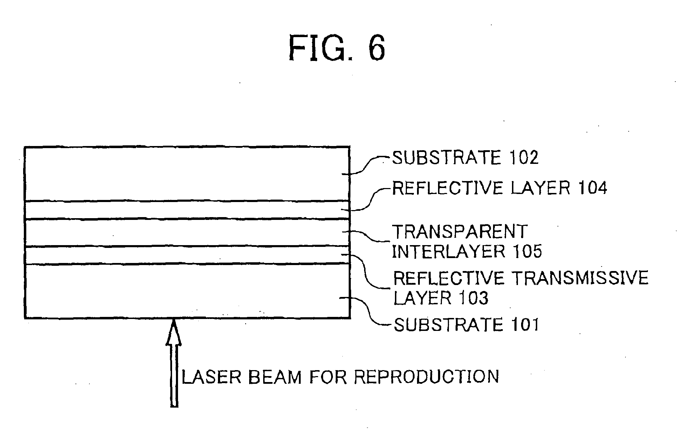

Fig. 6 is a cross-sectional view illustrating an exemplary configuration of a conventional type of DVD configured to including two recording layers.

A first substrate 101 and a second substrate 102 are laminated together with a transparent interlayer 105 composed of an ultraviolet curable resin interposed. On an inner surface of the substrate 101, recording marks with concave-convex shapes are formed, and by forming a reflection transmissive layer 103 and a reflective layer 104, laser light for reproduction is reflected or interfered, whereby a recording signal may be read.

In this type of DVD, signals are read out from two recording layers, and thus, a maximum of 8.5 GB storage capacity is obtained. Further, the substrates 101, 102 each have a thickness of about 0.6 mm, and the transparent interlayer 105 has a thickness of about 50 µm. The reflection transmissive layer 103 is so configured to have a reflectivity of about 30%. Thus, a laser beam for reproducing the recording information formed on the substrate 102 is reflected to be attenuated by about 30% of the total quantity of light; the beam is reflected by the reflective layer 104, it is further attenuated by the reflective transmissive layer 103 again, and comes out from the medium. The laser beam for the reproduction of information is focused onto the reflective transmissive layer 103 and the reflective layer 104, and the reflected light is detected to thereby reproduce signals on the respective recording layers. The information in DVD media is generally recorded and reproduced using a laser beam at a wavelength of about 650 nm.

The above-mentioned recordable DVD, DVD+R, DVD-R and DVD+RW media each have only one recording layer where information can be read from one side thereof. To yield higher storage capacities in these optical recording media, they need to be recordable from both sides. Two-layered optical recording medium where information can be recorded and reproduced from one side thereof has two recording layers., Signals are recorded by adjusting the focus of a writing laser beam onto the recording layer furthest from the optical pickup and projecting the writing laser beam thereon. The first recording layer thus attenuates the laser beam, causing the problem that the second recording layer cannot sufficiently absorb and reflect the laser beam to record the signals thereon.

The aforementioned Patent Document (4) discloses a structure in which an optical recording medium has two recording layers each comprising an organic dye configured such that information can be recorded and reproduced on the two recording layers from one side of the optical recording medium. This Patent Document discloses a structure such that the optical recording medium comprises two substrates bonded together. One of the two substrates is configured such that a laser beam is applied from the substrate side thereof, and the other is so configured that a laser beam is applied from the recording layer side thereof. However, this configuration still does not solve the problem that the second recording layer needs to sufficiently absorb and reflect the light.

Further, in Patent Document (4) the second recording layer is different from that of the recording layer provided to the conventional CD-R or DVD+R, and thus, the formation of the recording mark is difficult. The conventional single layer recording/reproducing medium is configured such that a substrate, a dye layer, a reflective layer and a protective layer are serially formed from the light incident side. However, in the two-layered recording/reproducing medium, the second recording layer is configured such that a laminated layer, an inorganic protective layer, a recording layer, a reflective layer and a substrate are sequentially formed from the light incident side (of the light which has passed through the first recording layer). Thus, a recording mark forming condition (i.e., neighboring layer) of the recording layer is different, which makes it difficult to obtain the modulation suitable for corresponding to the DVD system, or to obtain a recording/reproducing performance such as a jitter value.

Patent Documents (5) and (6) disclose a medium configured as described above. Specifically, an optical recording medium including a laminated layer, an inorganic protective layer, a recording layer, a reflective layer and a substrate are formed sequentially from the light incident side (of the light which has passed through the first recording layer). However, only the information related to the presence/absence of the recording mark (i.e., modulation) is disclosed, and the configuration is the same as that of the Patent Document (4), which includes two substrates bonded together, one of which is conventionally configured such that the laser beam is applied to the substrate surface, and the other is configured such that the laser beam is applied to the recording layer surface. However, this configuration does not still solve the problem related to the recording and reproduction of the signals.

Because of these reasons, a need exists for a hybrid DVD media with a simple method of forming such an optical recording medium is also desired.

### SUMMARY OF THE INVENTION

These and other objects of the present invention, either individually or collectively, have been satisfied by the discovery of

An optical recording medium comprising: a first transparent substrate:
a second substrate including a ROM portion in which information is pre-recorded, and a writable portion previously provided with a guide groove; a reflective layer; an information recording layer including an organic dye; and an inorganic protective layer, each layer being formed in this order on the second substrate, the optical recording medium being characterized in that: the second substrate is bonded with the first transparent substrate, with an interposition of a transparent organic interlayer, with the first transparent substrate and the second substrate being faced outward, and also characterized in that: signal information formed on the information recording layer of the second substrate is recorded or reproduced by optical beam irradiation performed from the side of the first transparent substrate.

Also disclosed is a manufacturing method of an optical recording medium, characterized in that: on a second substrate including a ROM portion in which information is pre-recorded, and a writable portion previously provided with a guide groove, a reflective layer, an information layer composed of an organic dye and an inorganic protective layer are formed in this order; and the second substrate is bonded to a first transparent substrate with an interposition of the transparent organic interlayer, with the first optically transmissive substrate and the second substrate faced outwards.

### BRIEF DESCRIPTION OF THE DRAWING(S)

Various other objects, features and attendant advantages of the present invention will be more fully appreciated as the same becomes better understood from the detailed description when considered in connection with the accompanying drawing(s) in which like reference characters designate like corresponding parts throughout and wherein:
[Fig. 1]

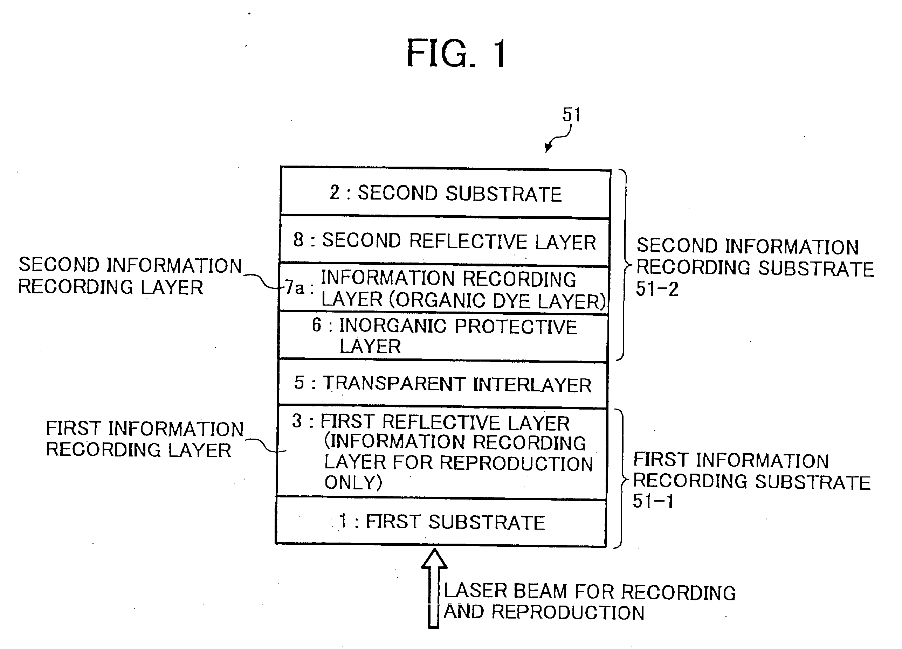

   Fig. 1 is a diagram illustrating the bonded structure of an optical recording medium according to a first embodiment of the present invention.
[Fig. 2]

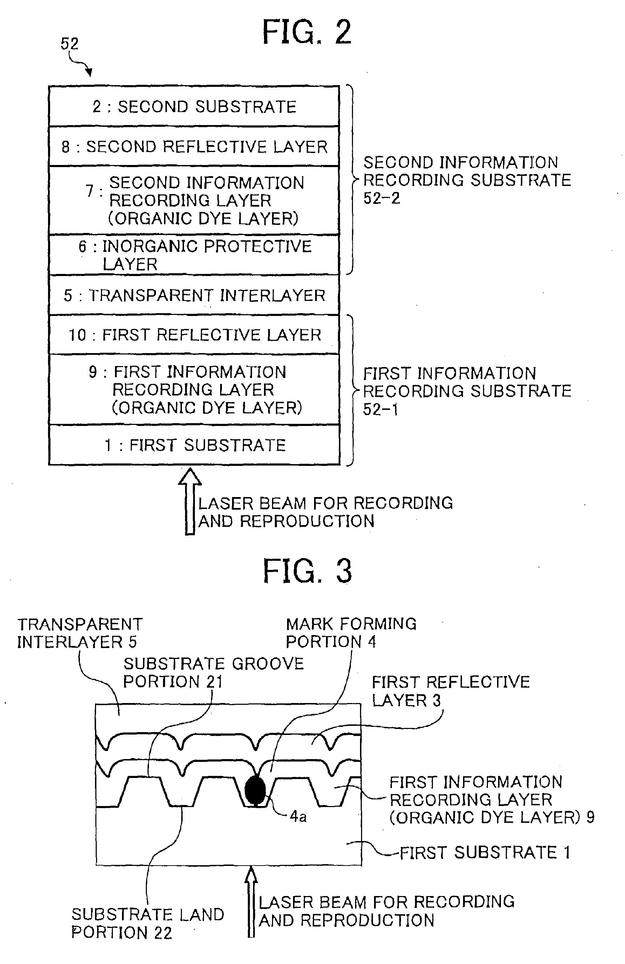

   Fig. 2 is a diagram illustrating the bonded structure of an optical recording medium according to a second embodiment of the present invention.
[Fig. 3]
   Fig. 3 is a schematic cross-sectional view illustrating an exemplary configuration of a main part of the optical recording medium in Fig. 2.
[Fig. 4]

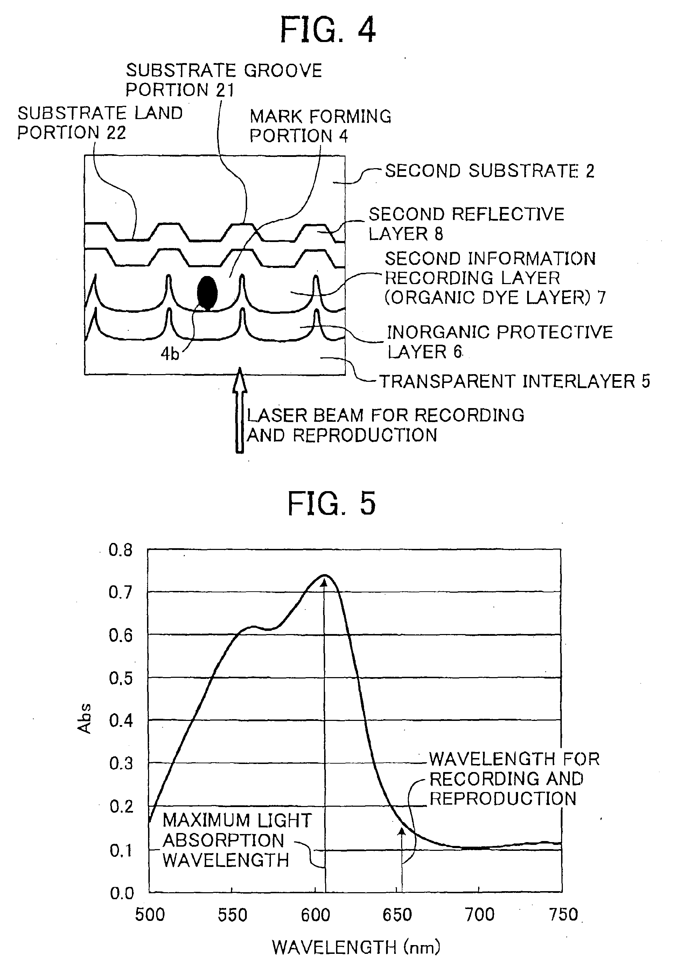

   Fig. 4 is a schematic cross-sectional view illustrating another exemplary configuration of a main part of the optical recording medium in Fig. 2.
[Fig. 5]
   Fig. 5 is a graph showing an example of an absorption spectrum of a recording layer including an organic dye.
[Fig. 6]
   Fig. 6 is a cross-sectional view illustrating an exemplary configuration of a conventional DVD having two recording layers.
[Fig. 7]

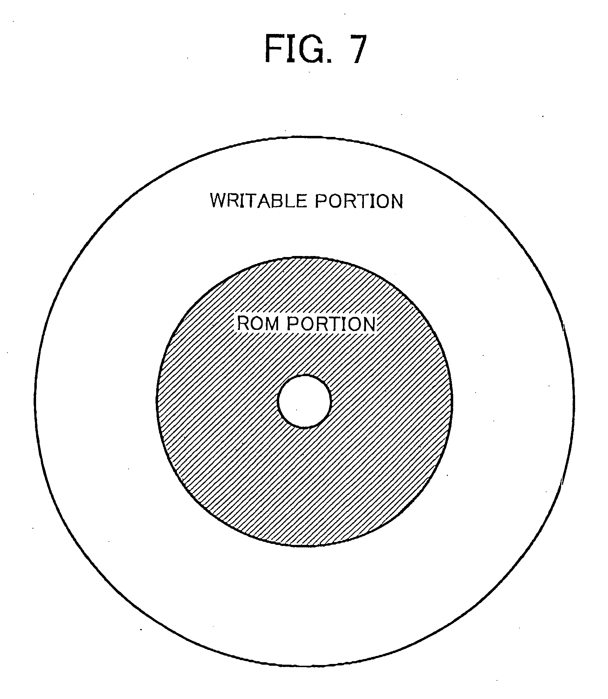

   Fig. 7 is a top-down view illustrating an exemplary configuration of an optical recording medium according to the present invention.

### DETAILED DESCRIPTION OF THE INVENTION

The present invention involves a two-layer type recordable optical recording medium in which recording may be done from one side. This optical recording medium includes two recording layers, one of which is a second recording layer configured to include a substrate, a reflective layer, a dye layer and an inorganic protective layer being laminated in this order. The substrate preferably has a depth ranging from 200 to 600 Å .

Specifically, this optical recording medium includes a first substrate with optical guide grooves which include a first information recording layer enabling an incremental writing having an organic dye thereon, and a second reflective layer. Both layers are formed sequentially. The medium also includes a second substrate, with optical guide grooves, which includes a second reflective layer, a second information recording layer with an organic dye, and an inorganic protective layer sequentially formed in this order on the surface of the second substrate. Both the first and second substrates are bonded together with a transparent organic interlayer, with the surface of each substrate faced outward. An optical recording medium formed in this way is characterized in that from the surface side of the first substrate, signal information formed on the first and second information recording layers is recorded or reproduced. In this case, a recording property may be optimized with each of the layers by adjusting the material used and thickness of the layers.

However, this type of optical recording medium has a problem that when a laser beam is focused on the information recording layer, its focus setting has been difficult to obtain. A single layer medium has a substrate having a depth of approximately 0.6 µm, and thus, the optical pickup for the single layer medium is set at 0.6 µm, which makes the focus setting easier to obtain. However, the pickup for using the two-layered medium needs to set focusing at approximately 0.57 µm or 0.63 µm with respect to each recording surface, thereby causing an optical aberration. Therefore, if a recording is performed onto the two-layered optical medium by using an optical pickup drive, it requires a complicated setting control by, for example, adjusting the focus-offset and conducting a trial writing operation.

As a result of realization of the two layer recording capacity comparable to the ROM capacity, provision of copy protection function becomes necessary. As for the copy protective measure, all the discs need to be provided with the copy protection, however, the method of providing the copy protection is problematic. Namely, if all the discs need to be pre-recorded with the data, productivity tends to decrease compared to the conventional process. More specifically, the addition of processes for recording information by the recording drive and control and for inspecting the reproduction quality becomes required, thereby increasing the cost of the optical recording medium.

The present invention solves the aforementioned problems. An object of the invention is to provide a hybrid DVD medium with characteristics of both the ROM medium and the recordable medium, by providing a recordable layer and a read-only ROM portion on the same recording surface. Another objective is to provide an optical recording medium capable of obtaining a stable focus setting while recording and suitable for providing copy protection.

The invention according to a first exemplary embodiment relates to an optical recording medium comprising:
a transparent first substrate; a second substrate including a ROM portion (for reproduction only) in which information is pre-recorded, and a writable portion previously provided with a guide groove; a reflective layer; an information recording layer including an organic dye; and an inorganic protective layer, each layer being formed in this order on the second substrate, the optical recording medium being characterized in that: the second substrate is bonded with the first transparent substrate, with an interposition of an transparent organic interlayer, with the first transparent substrate and the second substrate being faced outward, and also characterized in that: signal information formed on the information recording layer of the second substrate is recorded or reproduced by optical beam irradiation performed from the side of the first transparent substrate.

In accordance with a second embodiment, the optical recording medium has a first transparent substrate that is configured to be a read-only medium comprising a ROM portion, on the substrate surface, in which information is pre-recorded, and a reflective transmissive layer is formed thereon.

In accordance with a third embodiment, an optical recording medium has a first transparent substrate that is configured to be a writable medium, in which a first information recording layer including an organic dye on the substrate surface and a guide groove, and the reflective transparent layer are formed in this order.

In accordance with a fourth embodiment, an optical recording medium is used with a DVD optical system with a wavelength of 640 to 680 nm for recording and reproducing the information, a depth of the concave-convex mark of a ROM portion formed in the surface of a second substrate is from 1200 to 1800 Å , and a depth of a guide groove is from 200 to 600 Å .

In accordance with a fifth embodiment, any of the optical recording media as described in connection with the first through fourth embodiments, is further characterized in that the inorganic protective layer is formed of a material having a refractive index of 2 or more.

In accordance with a sixth embodiment, the optical recording medium as described in connection with any of the first through fifth embodiments, is further characterized in that the inorganic protective layer is formed of a material mainly including ZnS.

In accordance with an exemplary recording method utilizing any one of the optical recording medium as described in connection with the six embodiments above, characterized in that, using the ROM signal information formed in the second substrate, a signal is recorded in the information recording layer of the second substrate.

In accordance with an exemplary method of manufacturing an optical recording medium, on a second substrate having a ROM portion in which information is pre-recorded and a writable portion previously provided with a guide groove, a reflective layer, an information layer composed of an organic dye and an inorganic protective layer are formed in this order on the second substrate; and the second substrate is bonded to a first transparent substrate with an interposition of the transparent organic interlayer, such that the first optically transmissive substrate and the second substrate face outward.

According to the optical recording medium as described in accordance with the first embodiment, and as shown in FIG. 7, the optimal recording signal characteristics may be obtained from either the ROM portion and the portion for incremental writing. In addition, according to the exemplary manufacturing method as described above, the optical recording medium having the above characteristics may be provided with a high productivity.

According to the optical recording medium formed in accordance with the second embodiment the information corresponding to the storage capacity of one whole ROM disc may be reproduced from one surface side. According to the optical recording medium formed in accordance with the third exemplary embodiment, in addition to the property obtainable with the optical recording medium as described for the second embodiment, the information corresponding to the storage capacity of one whole optical disc may be recorded and reproduced from one surface side.

According to the optical recording medium formed in accordance with any of the fourth through sixth embodiments the optimal recording signal characteristics may be secured in conformity with the DVD standard.

Thus, the present invention has a wide applicability to i). hybrid optical recording medium having a ROM portion dedicated only to reproduction and a recordable portion in which incremental writing is possible, ii). DVD-R and DVD+R discs, and iii). a dual-layer type of optical recording medium in which two recording layers may be available for use to record and reproduce information from one surface side.

A description will now be given in detail of the structure and performance of the optical recording medium according to the embodiment of the present invention with reference to the Figures. Where the numerals represent like elements. The optical recording medium of the present invention is configured such that optimal recording characteristics may be obtained in a portion for incremental writing. Also, by providing a concave-convex mark on a surface of the second substrate as identical to a ROM portion, optimal signal characteristics may be obtained from the ROM portion.

Fig. 1 shows a bonded structure of an optical information recording medium 51 according to a first embodiment of the present invention, and Fig. 2 shows a bonded structure of an optical information recording medium 52 according to a second embodiment of the present invention. In Fig. 1, the first information recording layer reference numeral 3) is for reproduction only, and the second information recording layer (reference numeral 7a) is for recording and reproduction. The embodiment illustrated in Fig. 2 exemplifies a first information recording layer (numeral 2) and a second information recording layer (given a numeral 7) that are both suitable for recording and reproduction.

An optical recording medium 51 as shown in Fig. 1 is configured such that the first information recording substrate 51-1 and the second information recording substrate 51-2 are bonded together with an interposition of (a transparent interlayer 5 between the two substrates 51-1, 51-2. Preferably the transparent interlayer 5 is made of an organic material. In addition, an optical recording medium 52 as shown in Fig. 2 is configured such that the first information recording substrate 52-1 and the second information recording substrate 52-2 are bonded together with an interposition of the transparent interlayer 5 between the two substrates 52-1, 52-2.

The embodiments illustrated in Figs. 1 and 2 include first substrate 1, a second substrate 2, a first reflective layer 3 (which is a first information recording layer for reproduction only composed of a reflective layer), an inorganic protective layer 6, a second information recording layer 7, (preferably made of an organic dye, an information recording layer 7a preferably made of an organic dye layer, a second reflective layer 8, a first information recording layer 9,preferably an organic dye layer), and a first reflective layer 10. These layers are preferably bonded sequentially as shown in the Figures. Further, in accordance with the exemplary embodiment as shown in Fig. 1, the medium 51 includes a first information recording layer 3 and a second information recording layer 71.

Each of the aforementioned optical recording mediums 51, 52 is, as shown in Figs. 1 and 2, configured such that recording and reproducing information is performed from the first substrate 51-1 or 52-1 surface side. In addition, the present invention may be formed as a single layer recording medium without providing a first recording layer.

Figs. 3 and 4 schematically illustrate an exemplary configuration of the main part of the optical recording medium 52. Fig. 3 shows a first information recording layer 9, and Fig. 4 shows a second information recording layer 7. The recording layers 7, 9 include a mark forming portion 4, recording marks 4a and 4b, a substrate land portion 21, and a substrate groove portion 22.

In Figs. 3 and 4, the recording mark 4a to be formed in the mark forming portion 4 of the first information recording layer 9 is formed at a position corresponding to the substrate groove portion 22 of the first substrate 1. The recording mark 4b to be formed in the mark forming portion 4 of the second information recording layer 7 is formed at a position corresponding to the substrate land portion 21 of the second substrate 2. Such recording marks 4 1 a, 4b should preferably be formed in the second recording layer 7 without thermal deformation, for inhibiting potential broadening of the recording marks 4a, 4b thereby reducing crosstalk and ensuring sufficiently low jitter when recording is performed.

As illustrated in Figs. 3 and 4, shapes of the grooves 21 in the first and second substrates are different. In DVD+R and DVD-R media of 4.7 GB at a pitch of 0.74 µm, the grooves 21 of the first substrate 1 preferably have a depth of 1500 to 2500 Å and a groove width W (at bottom side) of 0.1 to 0.35 µm. As shown in Fig. 3, the grooves 21 are often filled with the dye when the dye film is formed with spin coating. Thus, the shape of the interface between the dye layer 1 and the reflective layer 8 is determined by the amount of the dye in the grooves 21 and the shapes of the grooves. The above-mentioned dimensional ranges of the grooves 21 are suitable for better interfacial reflection.

The guide grooves 21 formed in the second substrate 2 preferably have a depth D of 200 to 600 Å. By restricting the depth D of the grooves in the above range, and by reducing attenuation of the reflected light due to the guide grooves 21 formed in the second substrate 2, a high reflectivity ratio may be easily obtained from the second information recording layer 7. As shown in Fig. 4, the shape of the interface between the dye layer and the reflective layer 8 is determined by the shapes of the grooves 21 in the substrate, and for satisfactorily utilizing the interfacial reflection of the light, the depth of the grooves is preferably within the above range.

At a wavelength of a light beam for recording and reproduction of information to the DVD medium (about 650 nm), the guide grooves 21 preferably have a width W (bottom width) of 0.1 to 0.35 µm. Grooves with a depth exceeding the preferred range and/or a bottom width exceeding the above range may often invite a decreased reflectivity. Grooves with a depth less than the above range and/or a bottom width less than the above range may cause recording marks to be varied and the jitter to be increased.

As apparent from Figs. 3 and 4, the grooves 21 and ROM pits (not shown) are formed in a convex shape for the incident optical beam. Therefore, in the present invention, a stumper for forming a substrate having a shape contrary to that of the conventional type of concave grooves and ROM pits needs to be prepared.

In the present invention, in particular, when a recording mark 4a, 4b is formed in the first information recording layer 9 and then in the second information recording layer 7 with such a recording and reproducing beam attenuated by the first reflective layer 10, compared with a two-layered ROM disc such as the DVD-ROM disc, attenuation of light is induced by an amount of light absorbed by the first recording layer 9. Due to this effect, recording sensitivity may be degraded at the second information recording layer 7. Further, at the second information recording layer 7, the focus offset due to the optical aberration may tend to occur, thereby causing the recording mark 4a, 4b to be widened and the crosstalk to the adjacent tracks to be increased.

Further, the shape of the grooves 21 in the second substrate 51-2 may be a factor that causes the crosstalk to increase. Specifically, if the polarity of the concave-convex shape as seen from the incident surface is made consistent in the second information recording layer 7, recording marks 4a, 4b are formed in the land portion 22 (convex portion), and thus, it is impossible to prevent broadening of recording marks 4a, 4b by the grooves 21. Also, in a case that the recording marks 4a, 4b are formed in the land portion the main reflective surface of the first information recording layer 9 is the interfacial layer between the recording layer and the second reflective layer 8. Accordingly, the second substrate 2 needs to have guide grooves 28 having a depth less than that of the guide grooves 28 of the first substrate 51-1, in order to minimize the crosstalk.

According to the present invention, recording marks 4a, 4b are formed without thermal deformation so as to ensure a sufficient recording sensitivity in the second recording layer 7 and to prevent broadening of the recording marks 4a, 4b. To prevent thermal deformation, the inorganic protective layer 6 which serves as a layer for preventing deformation is arranged adjacent to the second recording layer 7, 7a. The inorganic protective layer 6 provided on the second information recording layer 7 also serves as a barrier layer which protects the recording layer from an adverse effect of the transparent organic interlayer 5. Thus, an adhesive which may dissolve the dye can be used as the transparent organic interlayer 5, and the two substrates 1, 2can easily be bonded with each other.

Further, the first optically transmissive substrate 1 may be configured to include a ROM portion (for reproduction only) in which information is pre-recorded on the substrate, and to form a reflective transmissive film thereon. Thus, such an optical recording medium (52) including a ROM signal portion in the first substrate 1 and an recordable layer in the second substrate 2 may be provided. An optical recording medium may alternatively be configured such that the first optically transmissive substrate includes a first -recordable information recording layer which includes an organic dye and a reflective transmissive film, and the first layer and the film are formed sequentially on the substrate. Thus, the optical recording medium including a first substrate and the second substrate which includes an recordable layer may be realized.

In the case of a DVD optical system using light beams having wavelength for recording and reproducing information of approximately 650 nm, the depth of the concave-convex mark in the ROM portion formed in the second substrate surface is in a range from about 1200 to about 1800 Å. Further, the depth of the guide groove is about 200 to about 600 Å. If the depth is less than 1200 Å, the pit signal strength becomes weak, which may easily cause a ROM signal error or guide groove addressing signal error. On the other hand, if the pit depth is more than 1800 Å, the reflectivity ratio tends to decrease and the track servo signal fluctuates. Preferably the width of the concave-convex mark of the ROM portion on the substrate surface is approximately 0.1 to 0.35 µm at bottom side, and approximately 0.3 to 0.7 µm at upper side. In addition, a groove width is preferably of 0.1 to 0.35 µm at bottom side, and 0.3 to 0.7 µm at an upper side.

In the optical recording medium of the present invention, by using ROM signals provided on the second substrate, focus adjustment, which has conventionally been critical, may be set easily. In addition, the optical recording medium of the present invention is capable of recording the copy protection information as signal data provided in the ROM portion. For example, the disc specific encryption data is previously recorded in the ROM portion, and the encryption data is further recorded in the disc's recordable portion together with other copy protection information. If the pre-recorded data is not accorded with the authentication data, recording and/or reproducing operations may be restricted.

Exemplary materials for the optical recording medium of the present invention will now be explained.

The optical recording medium of the present invention ensures its high reflectivity based on multiple interactive effects at both the interfaces of the dye-containing recording layers, as in DVD+R and CD-R media. The recording layer including an organic dye needs optical properties such as a high refractive index n and a relatively low absorption coefficient k. The preferable range for the refractive index n is equal to or more than 2, and the preferable range for an absorption coefficient k is about 0.03 to less than 0.2. Such optical properties can be obtained by setting the wavelength of a light beam for recording and reproducing information at a longer-wavelength edge of the optical absorption of the dye film.

Fig. 5 shows an example of an optical absorption spectrum of a recording layer comprising an organic dye. In this drawing, the horizontal axis shows an absorption (Abs).

Suitable materials for the first and second information recording layers, i.e., dye-containing information recording layers (organic dye layers) are cyanine dyes, phthalocyanine dyes, pyrylium/thiopyrylium dyes, azulenium dyes, squarylium dyes, azo dyes, formazan chelate dyes, dyes of complex salts of metal such as Ni or Cr, naphthoquinone/anthraquinone dyes, indophenol dyes, indoaniline dyes, triphenylmethane dyes, triallylmethane dyes, aminium/diiminium dyes and nitroso compounds. When necessary, the recording layers may further include additional components, for example, a binder and a stabilizer.

Among the above-mentioned dyes, at least one of tetraazaporphyrazine dyes, cyanine dyes, azo dyes and squarylium dyes is preferably used. These dyes can easily yield a dye film by applying a solution thereof, and they may easily be altered to adjust the optical properties. The resulting dye film exhibits a maximum absorption at a wavelength of about 580 to 620 nm and thus exhibits the desired optical properties at the wavelength of laser light (about 650 nm). The thickness of the first organic dye layer is preferably from about 100 to 5000 Å , and, in particular, more preferably from about 400 to 800 Å . The recording sensitivity may decrease if the thickness of the optical absorption layer is less than the above range, or the reflectivity may decrease if the thickness is larger than the above range.

The thickness of the second information recording layer (i.e., the second organic dye layer) is preferably from about 500 to 1000 Å . If the thickness of the dye film is not within this range, a satisfactory jitter property may not be obtained. Further, the ratio of the dye film thickness between the guide groove portion and the land portion (between the guide grooves) is preferably in a range of from 80 to 100 % (as a ratio of the guide groove portion against the land portion).

The optical absorption of the dye-containing recording layer may be adjusted by altering the thickness of the dye film or by the absorption property of the dye. In the DVD recording medium of the present invention, it is preferred that the dye-containing layer exhibits a maximum or peak absorption at a wavelength within the range of 580 to 620 nm. If the dye-containing recording layer exhibits the peak absorption at a wavelength less than the above range, the recording sensitivity may decrease. And if larger than the above range, a satisfactory reflectively may not be obtained.

Further, the thermal deformation temperature of the dye is preferably in a range of 250 to 350 °C. If the thermal deformation temperature is higher than the above range, the recording sensitivity may decrease. On the other hand, if the thermal deformation temperature is below the above range, the heat-stability may decease and the recording marks tend to be broadened.

The materials for the substrate can be selected from any of the various materials used for the substrate of the conventional optical recording media. Examples of the materials for the substrates are acrylic resins such as poly(methyl methacrylate)s; vinyl chloride resins such as poly(vinyl chloride)s and vinyl chloride copolymers; epoxy resins; polycarbonate resins; amorphous polyolefins; polyesters; glass such as soda-lime glass; and ceramics. Among them, poly(methyl methacrylate)s, polycarbonate resins, epoxy resins, amorphous polyolefins, polyesters and glass are preferred for satisfactory dimensional stability, optical transparency and flatness, of which polycarbonates are more preferred for their good moldability.

Materials for the reflective layers used in the present invention are preferably substances having a high reflectivity with respect to the laser light. Examples of such substances are metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ca, In, Si, Ge, Te, Pb, Po, Sn, Si, and Sic. Among them, Au, Al and Ag are preferred for their high reflectivity. Each of these substances can be used alone, or can be used as a mixture or alloy of two or more or substances.

The thickness of the reflective layers is generally from about 50 to 3000 Å. The thickness of the first reflective layer should be set so that the optical transmittance of the layer is 40% or more when the first information recording layer is a read-only reflective layer or when the first reflective layer is arranged on the first recording layer including an organic dye for recording. In these cases, the thickness is preferably from about 50 to 300Å for satisfactory optical transmittance. As the thickness of the film increases, the optical transmittance tends to decrease. In particular, a material mainly including Ag which exhibits the highest reflectance is most preferred, and its preferably thickness ranges from about 75 to 150 Å. In order to secure durability with this range of the film thickness, an alloy of Ag adding a subtle amount of Nd, Cu, Pd, (or other materials) may preferably be used. The additional amount is in general approximately in a range from 0.2 to 2 % of the film. On the other hand, the second reflective layer preferably has a thickness of about 1000 to 3000 Å.

In the present invention, the transparent organic interlayer may preferably be used as an adhesive layer. Known materials may be used as the adhesive layer, selected from acrylate, epoxy or urethane ultraviolet curable or thermosetting adhesives.

Suitable materials for the inorganic protective layer of the optical recording medium of the present invention preferably have a refractive index n equal to or larger than 2. Specifically, materials mainly including a sulfide containing metal or semimetal such as Zn, Ge, Sb, Sn, In, Al, Pb and Si are preferred for obtaining a higher refractive index.

Inorganic substances having high light transmissive properties such as SiO, SiO2, MgF2, SnO2, ZnS, ZnS-SiO2, and ZnS-SiC, of which a material mainly comprising ZnS, such as ZnS-SiO2 or ZnS-SiC, is typically preferred for low crystallinity and high refractive index.

Among them, a material mainly including ZnS is preferably used because of its low crystallinity and its excellent film-forming property. The preferred thickness of the inorganic protective layer is in a range from 100 to 3000 Å, and the more preferred range of the thickness is from 800 to 1800 Å. If the thickness is less than 100 Å a sufficient recording signal modulation (contrast) may not be obtained, and if the thickness is larger than 3000 Å , disturbance noise of the film due to crystallization tends to increase.

As the inorganic protective layer may mainly include ZnS, materials such as ZnS-SiC, ZnS-Si, ZnS-Ge, ZnS-ZnO-GaN, and ZnS-ZnO-In2O3-Ga2O3 may be used. The content ratio of ZnS in the inorganic materials is preferably within a range of approximately 60 to 90 molar % from the view of crystallinity. For example, the preferred range for ZnS-SiC is ZnS/SiC = 80 mol% / 20 mol%, namely, a preferred molar ratio of 8 to 2 to. Further, the thickness of the inorganic protective layer is preferably more than 300 Å for functioning as a deformation preventive layer.

An exemplary method of forming an optical recording medium in accordance with the present invention is now explained with reference to Fig. 2.

When producing the optical recording medium 52, first, a reflective layer 10 is provided by a vacuum film forming method on the second substrate 2 on which grooves and pits (not shown) are formed, and on the surface thereof, a second information recording layer 7 including an organic dye is formed by a coating film-forming method. Further, on the surface of the thus formed substrate 2, an inorganic protective layer 6 is formed by a vacuum film forming method, whereby a second information substrate 7 is formed.

A substrate on which the first information recording layer is formed, meaning a first transparent substrate is prepared. By bonding the two substrates with an interposition of the transparent organic interlayer 5 composed of an adhesive, the optical recording medium 52 may easily be produced. The first information recording substrate 1 may be produced in the processes similar to those for producing the conventional DVD+R or DVD-ROM media.

Specifically, a method for producing an optical recording medium according to the present invention includes for example the following processes:

The production of a first substrate configuration (DVD+R ) may include the acts of:
(1) forming a recording layer, by coating film means, on the substrate on which grooves and/or pits are formed; and
(2) producing a reflective layer, by vacuum film forming method, on the dye-containing recording layer.

The production of a second substrate structure and its bonding method may include the acts of:
(3) forming a reflective layer, by vacuum film forming means, on the substrate on which grooves and/or pits are formed;
(4) forming a recording layer mainly including dye, by coating film forming means, on the reflective layer
(5) forming an inorganic protective layer on the dye-containing recording layer by vacuum film forming means; and
(6) bonding the above information substrates with an interposition of transparent organic interlayer as an adhesive layer

The aforementioned processes for forming the reflective layer, recording layer and the inorganic protective layer, and the bonding process will now be described in more detail.

A reflective layer is formed, by vacuum film forming means, on the substrate on which guide grooves and/or pits are formed. Namely, the aforementioned optical reflective materials are coated by vapor deposition, sputtering or ion plating, and the reflective layer is formed.

A recording layer mainly including a dye compound is provided by coating a film forming means. Specifically, the organic dye compound is dissolved in a solvent to yield a coating solution, and the coating solution is applied to the substrate, thereby forming a recording layer. Examples of the solvent are known organic solvents such as alcohols, Cellosolves, halogenated hydrocarbons, ketones and ethers. The coating solution is preferably applied by spin coating. Thus, the thickness of the layer may be controlled by adjusting the concentration and viscosity of the coating solutions, and the drying temperature of the solvent.

An inorganic protective layer is next formed on the recording layer by vacuum film forming means. Specifically, the above inorganic protective material may be coated on the recording layer by vapor deposition, sputtering or ion plating, thereby forming a transparent inorganic protective layer.

The above two information substrates 52-1 and 52-2 (FIGS. 1 and 2) are bonded with each other with an interposition of adhesive layer (optically transmissive organic interlayer). Specifically, an adhesive is added dropwise onto the surface of the inorganic protective layer of the second information substrate 52-2, the adhesive is spread uniformly by spin coating method, and simultaneously, the first information substrate 52-1 is attached thereto. Thereafter, ultraviolet rays are applied to cure the adhesive. The ultraviolet rays are preferably applied from the first substrate, since the first substrate has higher optical transmissivity.

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Exemplary embodiments of the present invention will now be explained. However, the present invention is not limited to the following embodiments.

With reference to Fig. 1, a first example is now described. A film of AgIn (with an atomic % of 99.5/0.5) was formed onto a second substrate by sputtering using Ar gas as a sputtering gas, thereby forming a second reflective layer about 1300 Å thick. The second substrate was made of a polycarbonate, had a diameter of 120 mm and a thickness of 0.57 mm and had guide grooves (concave and convex pattern) having a depth of 320 Å, a groove width (bottom width) of 0.25 µm and a track pitch of 0.74 µm, and ROM information pits having a depth of 1500 Å and a groove width (bottom width) of 0.25 µm.

Next, on the surface of the AgIn reflective layer, a squarylium dye compound, represented by Formula 1 below, was dissolved in 2,2,3,3-tetrafluoropropanol to form a coating solution. The thus obtained coating solution was applied to the Ag reflective layer by spin coating, and a second recording layer of approximately 800 Å thick was obtained. The light absorption spectrum of the second recording layer exhibited a maximum absorption at a wavelength of 607 nm and an absorbance (Abs) at the maximum absorption wavelength of 1.19. The thickness of the dye layer is verified by the cross-sectional TEM image.

Further, a film of ZnS-SiO2 at a molar ratio of 8:2 was formed onto the second recording layer by sputtering using Ar gas as a sputtering gas, and an inorganic protective layer about 1400 Å thick was formed. Thus, a second information substrate was prepared. The reflectance ratio of the above inorganic protective layer was 2.4.

On the other hand, a squarylium dye compound represented by Formula 1 and a formazan metal chelate compound represented by Formula 2, were mixed with a weight ratio of 7:3 and dissolved in 2,2,3,3-tetrafluoropropanol to form a coating solution. The thus obtained coating solution was applied by spin coating to the first substrate made of a polycarbonate, having a diameter of 120 mm and a thickness of 0.58 mm and having guide grooves (concave and convex pattern) having a depth of 1500 Å, a groove width (bottom width) of 0.25, and a track pitch of 0.74 µm. A first recording layer of approximately 500 Å thick was obtained. Next, by applying Ar gas as a sputtering gas on the first information recording layer, a reflective layer composed of AgIn (with an atomic % of 99.5/0.5) having an approximate thickness of 110 Å was formed.

The above-prepared first and second information substrates were bonded with an ultraviolet curable adhesive (KAYARAD DVD 576M, available from Nippon Kayaku Co., Ltd.) to yield an optical recording medium having the layer configuration shown in Fig. 2.

With respect to the second information recording layer of the optical recording medium, DVD signals were recorded on the optical recording medium at a wavelength of 657 nm, a numerical aperture (NA) of 0.65 and a linear velocity of 9.2 m/s and were then reproduced with a linear velocity of 3.8 m/s. As a result, the recordable portion showed a reflectivity (I14H) after recording of 19% and a degree of modulation (I14/I14H) of 90%, a Plsum of 8:20 or less. In addition, the ROM portion showed a reflectivity (I14H) after recording of 22% and a degree of modulation (I14/I14H) of 65%, a PIsum of 8:20 or less. These resulting values satisfy the DVD standard.

As the recording and evaluation equipment, [an optical tester DDU 1000 from Pulstec Industrial Co., Ltd. was used]. Focus setting of the second recording layer was set such that the degree of modulation in the ROM portion showed the maximum value, and recording and reproduction were made.

A second example is now described. An optical recording medium was formed similarly to Example 1 except that an inorganic protective layer was formed on a second substrate having guide grooves (concave and convex pattern) having a depth of 600 Å, a groove width (bottom width) of 0.25 µm and a track pitch of 0.74 µm, and ROM information pits having a depth of 1800 Å and a groove width (bottom width) of 0.25 µm, and that a film of ZnS-SiO2 at a molar ratio of 8:2 was formed to yield an inorganic protective layer of about 1800 Å thick. The reflectance ratio of the inorganic protective layer was 2.0.

With respect to the thus obtained optical recording medium, evaluations were made similarly as discussed above Example 1.

As a result, the recordable portion showed a reflectivity (I14H) after recording of 18% and a degree of modulation (I14/I14H) of 70%, a PIsum of 8:20 or less. In addition, the ROM portion showed a reflectivity (I14H) after recording of 21 % and a degree of modulation (I14/I14H) of 75%, a PIsum of 8:20 or less. These resulting values t satisfy the DVD standard.

A third example is now described. An optical recording medium was formed similarly to of Example 1 except that an inorganic protective layer was formed on a second substrate having guide grooves (concave and convex pattern) having a depth of 200 Å, a groove width (bottom width) of 0.25 µm and a track pitch of 0.74 µm, and ROM information pits having a depth of 1200 Å and a groove width (bottom width) of 0.3 µm, the thickness of the dye film composed of a squarylium dye compound was changed to 1000 Å. The thickness of the film of ZnS-SiO2 at a molar ratio of 8:2 was about 1800 Å.

With respect to the thus obtained optical recording medium, evaluations were made similarly to the case of Example 1.

As a result, the recordable portion showed a reflectivity (I14H) after recording of 22% and a degree of modulation (I14/I14H) of 62%, a PIsum of 8:20 or less. In addition, the ROM portion showed a reflectivity (I14H) after recording of 25% and a degree of modulation (I14/I14H) of 60%, a PIsum of 8:20 or less. These resulting values satisfy the DVD standard.

Having now fully described the invention, it will be apparent to one of ordinary skill in the art that many changes and modifications can be made thereto without departing from the spirit and scope of the invention as set forth therein.

The following examples listed below describe advantageous embodiments of the invention:
1. An optical recording medium comprising:
   a second substrate including a ROM portion in which information is pre-recorded, and an incrementally writable portion previously provided with a guide groove;
   a reflective layer;
   an information recording layer including an organic dye; and
   an inorganic protective layer, each layer being formed in this order on the second substrate,
   the optical recording medium being characterized in that:
      the second substrate is bonded with a first transparent substrate, with an interposition of an transparent organic interlayer, with the first transparent substrate and the second substrate being faced outward,
      and also characterized in that: signal information formed on the information recording layer of the second substrate is recorded or reproduced by optical beam irradiation performed from the side of the first transparent substrate.
2. The optical recording medium as described in example 1,
   characterized in that the first transparent substrate is configured to be a read-only medium comprising a ROM portion, on the substrate surface, in which information is pre-recorded, and a reflective transmissive layer is formed thereon.
3. The optical recording medium as described in example 2,
   characterized in that: the first transparent substrate is configured to be an incrementally writable medium, in which a first information recording layer including an organic dye on the substrate surface and a guide groove, and the reflective transparent layer are formed in this order.
4. The optical recording medium as described in examples 1 through 3, characterized in that a DVD optical system with a wavelength of 640 to 680 nm is used for recording and reproducing the information, a depth of the concave-convex mark of the ROM portion formed in the surface of the second substrate is from 1200 to 1800 Å, and a depth of the guide groove is from 200 to 600 Å.
5. The optical recording medium as described in any one of examples 1 through 4,
   characterized in that the inorganic layer is formed of a material having a refractive index of 2 or more.
6. The optical recording medium as described in any one of examples 1 through 5,
   characterized in that the inorganic protective layer is formed of a material mainly including ZnS.
7. A recording method of the optical recording medium as described in any one of examples 1 through 6, characterized in that, using the ROM signal information formed in the second substrate, a signal is incrementally recorded in the information recording layer of the second substrate.
8. A manufacturing method of an optical recording medium, characterized in that: on a second substrate including a ROM portion in which information is pre-recorded, and an incrementally writable portion previously provided with a guide groove, a reflective layer, an information layer composed of an organic dye and an inorganic protective layer are formed in this order; and the second substrate is bonded to a first transparent substrate with an interposition of the transparent organic interlayer, with the first optically transmissive substrate and the second substrate faced outward.

## Claims

1. An optical recording medium comprising:
a first transparent substrate (1);
a second substrate (2) including a ROM portion in which information is pre-recorded, and a writable portion previously provided with a guide groove;
a reflective layer (8);
an information recording layer (7, 7a) including an organic dye; and
an inorganic protective layer (6), each layer (8, 7, 7a, 6) being formed in this order on the second substrate (2),
the optical recording medium being **characterized in that**:
the second substrate (2) is bonded with the first transparent substrate (1),
with a transparent organic interlayer (5), with the first transparent substrate (1) and the second substrate (2) being faced outwards,
and **in that** signal information formed on the information recording layer (7, 7a) of the second substrate (2) is recorded or reproduced by optical beam irradiation performed from the side of the first transparent substrate (1).

2. The optical recording medium as in claim 1, **characterized in that** the first transparent substrate (1) is configured to be a read-only medium comprising a ROM portion, on the substrate surface, in which information is pre-recorded, and a reflective transmissive layer (3, 10) is formed thereon.

3. The optical recording medium as in claim 2, **characterized in that**: the first transparent substrate (1) is configured to be a writable medium, in which a first information recording layer (9) including an organic dye on the substrate surface and a guide groove (21), and the reflective transparent layer (10) are sequential layers thereon.

4. The optical recording medium as in claim 3, wherein a DVD optical system with a wavelength of 640 to 680 nm is used for recording and reproducing information, a depth of the concave-convex mark of the ROM portion formed in the surface of the second substrate (2) is from 1200 to 1800 Å, and a depth of the guide groove (21) is from 200 to 600 Å.

5. The optical recording medium as described in claim 1, **characterized in that** the inorganic protective layer (6) is formed of a material having a refractive index of 2 or more.

6. The optical recording medium as described in claim 1, **characterized in that** the inorganic protective layer (6) is formed of a material mainly including ZnS.

7. A recording method of the optical recording medium according to any one of claims 1 to 6, **characterized in that**, using the ROM signal information formed in the second substrate (2), a signal is recorded in the information recording layer (7, 7a) of the second substrate (2).

8. A recording method of the optical recording medium compromising the step of:
providing an optical recording medium according to claim 1.

9. A manufacturing method of an optical recording medium, comprising: forming a reflective layer (8), an information layer (7, 7a) composed of an organic dye and an inorganic protective layer (6) on a substrate (2) including a ROM portion in which information is pre-recorded and a writable portion previously provided with a guide groove (21); and bonding this substrate (2) to another transparent substrate (1) with an interposition of the transparent organic interlayer (5) with both substrates faced outwards.

10. An optical recording medium comprising:
a first recording layer (9, 3);
a second recording layer (7, 7a); and an inorganic protective layer (6) between the first and second recording layers (9, 3, 7, 7a); wherein at least one of the first (9, 3) and second recording layers (7, 7a) comprises a ROM portion and a writable portion.
